# EUROPÄISCHE PATENTANMELDUNG

(11) **EP 2 684 445 A1**
(43) Veröffentlichungstag der Anmeldung: **15.01.2014**
(21) Anmeldenummer: 13173672.0
(22) Anmeldetag: 25.06.2013
(51) Int. Cl.: A01G 1/08, E01C 11/22

(54) **Vorrichtung zur Begrenzung einer Grünfläche**

(30) Priorität: 25.06.2012 AT 502452012
(71) Anmelder: Pendelin, Wilfried, 4470 Enns (AT)
(72) Erfinder: Pendelin, Wilfried, 4470 Enns (AT)
(74) Vertreter: Jell, Friedrich

(57) **Zusammenfassung**

Es wird eine Vorrichtung (1) zur Begrenzung einer Grünfläche (2) mit einem zum Einbringen in das Erdreich (4) der Grünfläche (2) vorgesehenen Ankerprofil (3), das mindestens zwei gegenüberliegende und zwischen einander eine Aufnahme (5 bzw. 13) ausbildende Aufnahmeschenkel (7, 8 bzw. 23, 24) aufweist, und mit einem in die Aufnahme (5) des Ankerprofils (3) einsetzbaren Anschlussteil (6) gezeigt. Um den Anschlussteil (6) handhabungsfreundlich mit dem Ankerprofil (3) zu verbinden, ragen die Aufnahmeschenkel (7, 8 bzw. 23, 24) in Richtung des an das Ankerprofil (3) anschließenden Anschlussteils (6) vor und bilden mit dem Anschlussteil (6) eine lösbare Schnappverbindung (10) aus.

## Beschreibung

Die Erfindung betrifft eine Vorrichtung zur Begrenzung einer Grünfläche mit einem zum Einbringen in das Erdreich der Grünfläche vorgesehenen Ankerprofil, das mindestens zwei gegenüberliegende und zwischen einander eine Aufnahme ausbildende Aufnahmeschenkel aufweist, und mit einem in die Aufnahme des Ankerprofils einsetzbaren Anschlussteil.

Um Grünflächen zu begrenzen, ist aus dem Stand der Technik eine zweiteilige Vorrichtung bekannt (DE 2336535A1), die aus einem in das Erdreich der Grünfläche eintreibbaren Ankerprofil und ein mit diesem zu dessen horizontaler Verlängerung verbindbaren Anschlussteil besteht. Zum Zweck dieser Verbindung ist im Ankerprofil eine nutförmige Ausnehmung in Längsrichtung eingebracht, in die das Anschlussteil eingeschoben werden kann. Nachteilig erweisen sich derartige Ankerprofile neben ihrer konstruktiven Schwachstelle in der Anbindung an das Anschlussteil auch als vergleichsweise unkomfortabel in der Handhabung. Wird nämlich das Anschlussteil erst nach dem Eintreiben des Ankerprofils in den Boden mit dem Ankerprofil verbunden, kann sich eine Ausrichtung der Aufnahme gegenüber dem horizontal aufzunehmenden Anschlussteil als vergleichsweise schwierig herausstellen, insbesondere bei langen Ankerprofilen. Das Anschlussteil alternativ gemeinsam mit dem Ankerprofil in das Erdreich einzutreiben ist zwar vorstellbar, durch den seitlich verlagerten Schwerpunkt der Vorrichtung jedoch wenig praktikabel.

Eine Vorrichtung zur Begrenzung einer Grünfläche nach dem Oberbegriff des Patentanspruchs 1 ist aus der JP9009780A bekannt. Diese Vorrichtung zeigt ein Ankerprofil, das eine Nut für eine Steckverbindung mit einem horizontalen Anschlussteil ausbildet. Auf das Ankerprofil wird ein Abschlussteil geklebt, das ein Ausziehen des Anschlussteils aus der Steckverbindung verhindert. Nachteilig erfordert eine Klebeverbindung eine vergleichsweise reine Benetzungsfläche. Diesen Anforderungen kann besonders im Gartenbau meist nicht Folge geleistet werden, was die Klebeverbindung und damit Standfestigkeit solch einer Vorrichtung erheblich gefährdet.

Die Erfindung hat sich daher die Aufgabe gestellt, eine Vorrichtung der eingangs geschilderten Art auf konstruktiv einfache Weise derart zu verbessern, dass damit eine Grünfläche handhabungsfreundlich begrenzt werden kann. Außerdem soll die Vorrichtung risikolos begehbar sein und damit standfest sein.

Die Erfindung löst die gestellte Aufgabe dadurch, dass die Aufnahmeschenkel in Richtung des an das Ankerprofil anschließenden Anschlussteils vorragen und mit dem Anschlussteil eine lösbare Schnappverbindung ausbilden.

Ragen die Aufnahmeschenkel in Richtung des an das Ankerprofil anschließenden Anschlussteils vor, kann damit zunächst eine belastbare Aufnahme für das Anschlussteil geschaffen werden, die auch standfest ein Betreten der Vorrichtung und die dadurch entstehenden Drehmomente aufnehmen kann. Die einteilige Profilausführung des Ankerprofils kann nämlich eine hohe mechanische Belastbarkeit selbst bis zu seinen vorstehenden Aufnahmeschenkeln sicherstellen. Zudem kann damit die Gefahr einer Verschmutzung der Aufnahme vor einem Einsetzen des Anschlussteils klein gehalten werden, sodass auch nach Einbringen des Ankerprofils ein Anschlussteil unproblematisch angebracht und auch eine feste Verbindung sichergestellt werden kann. Zudem kann sich die Handhabbarkeit der Vorrichtung dadurch verbessern, wenn die Aufnahmeschenkel der Aufnahme mit dem Anschlussteil eine lösbare Schnappverbindung ausbilden. Außerdem kann solch eine Verbindung erheblichen mechanischen Belastungen standhalten und so zu einem belastbaren Konstruktionsverbund führen. Bilden die Aufnahmeschenkel der Aufnahme mit dem Anschlussteil eine lösbare Verbindung aus, kann die Vorrichtung eine hohe Wartungsfreundlichkeit am Anschlussteil erfüllen bzw. ermöglichen, dass die Grünfläche auch nach deren Begrenzung zugänglich bleibt. Beispielsweise kann dadurch ein nachträgliches Verlegen von Leitungen im durch das Anschlussteil überdeckten Bereich der Grünfläche möglich bleiben.

Im Allgemeinen wird erwähnt, dass das Anschlussteil auch als einteiliges Profil ausgebildet sein kann. Weiter wird im Allgemeinen erwähnt, dass unter einer Grünfläche eine unbebaute Freifläche verstanden werden kann. Eine Grünfläche kann daher einen Garten, eine Wiese, einen Rasen, eine Baumeinfassung, eine Wegeinfassung etc. darstellen.

Die lösbare Schnappverbindung kann, um ein exaktes Einrasten beim Einstecken zu erreichen, durch eine oder mehrere Nuten an den Aufnahmeschenkeln und durch eine in diese Nut entsprechend eingreifbare Feder bzw. in diese Nuten eingreifbare Federn des Anschlussteils ausgebildet werden. Dadurch verbessert sich nochmals sowohl die komfortable Handhabung durch ein merkbares Einrasten beim Anbringen der Anschlusssteile, als auch die gesamte Belastbarkeit des Konstruktionsverbundes. Des Weiteren wird dadurch ein unbeabsichtigtes Lösen des Anschlussteils vom Aufnahmeschenkel, wie beispielsweise beim Betreten der Vorrichtung oder bei unsachgemäßer Behandlung der Vorrichtung, verhindert. Andere Schnappverbindungen sind vorstellbar.

Besonders aber kann sich die Erfindung dadurch auszeichnen, wenn die Aufnahme einen Anschlag beim Eintreiben des Ankerprofils in das Erdreich ausbildet. Dieser Anschlag kann nämlich beim Einbringen des Ankerteils in die Grünfläche eine Freistellung der Aufnahme für das Anschlussteil gegenüber dem Erdreich der Grünfläche sicherstellen. Die Aufnahme kommt durch den Anschlag nämlich stets über dem Erdreich zu liegen, was diese vor einer Verschmutzung schützen kann. Zudem bildet das Ankerprofil über seine Aufnahmeschenkel ein einfach und deutlich erkennbares Einbringmaß des Ankerteils in das Erdreich aus. Beispielsweise kann damit bei einer horizontal ausgerichteten Aufnahme die Einbringtiefe des Ankerprofils in das Erdreich der Grünfläche begrenzt werden, wohingegen bei einer vertikal ausgerichteten Aufnahme der seitliche Abstand des Anschlussteils zur Grünfläche bzw. zu seiner Anschlussfläche festgelegt bzw. durch den Anschlag begrenzt werden kann.

Einfache Konstruktionsverhältnisse an der Vorrichtung können sich ergeben, wenn das Ankerprofil eine horizontale und eine vertikale Aufnahme ausbildet. Außerdem kann so die Vorrichtung nicht nur das Einsetzen eines Anschlussteils als horizontaler Fahrstreifen, sondern auch gleichzeitig ein Einsetzen eines Anschlussteils als vertikalen Beetstreifen ermöglichen.

Ist das Ankerprofil T-förmig ausgebildet und weist es an seinem oberen Ende die Aufnahmen auf, kann ein schlankes Ankerprofil ausgebildet werden, das trotzdem eine ausreichend breite obere Schlag- bzw. Druckfläche für eine einfache Handhabung aufweisen kann.

Besteht das Ankerprofil aus Metall, insbesondere Aluminium oder einer Aluminiumlegierung, kann die Standfestigkeit der Vorrichtung sowie deren Beständigkeit gegenüber Witterungseinflüssen erheblich verbessert werden.

Bildet das Ankerprofil an seinem Stoß eine Steckaufnahme für Steckverbinder aneinander anstoßender Ankerprofile aus, kann auf konstruktiv einfache Weise ein standfester Zusammenschluss verschiedener Ankerprofile hergestellt werden. Die Kippsicherheit der Vorrichtung kann dadurch deutlich erhöht werden, wobei eine Steckverbindung vergleichsweise einfache Handhabungsverhältnisse in der Montage ermöglichen kann.

Die Anordnung der Steckaufnahme zur Verbindung aneinander anstoßender Ankerprofile ist im Hinblick auf eine möglichst einfache Anbringung der Steckverbinder auf der aufnahmefreien Profilseite des Ankerprofils vorgesehen. Dadurch wird ein problemloses Anbringen der Steckverbinder sichergestellt und, unabhängig von möglicher Krafteinwirkung, die bei der Anbringung bzw. dem Entfernen von Anschlussteilen auf der gegenüberliegenden Seite entstehen kann, ein fester Zusammenschluss der Ankerprofile erreicht. Durch die Positionierung der Steckaufnahme für Steckverbinder auf der beschriebenen Seite des Ankerprofils, ist eine Wartung der Vorrichtung somit ohne Entfernung der Steckverbinder möglich.

Eine Kippsicherheit der Vorrichtung kann zusätzlich und alternativ auch dadurch erreicht werden, dass das Anschlussteil am gegenüberliegenden Ende, das die mit dem Ankerprofil zusammenwirkende Schnappverbindung aufweist, eine Steckaufnahme für Steckverbinder aneinander anstoßender Anschlussteile ausbildet. Außerdem kann dadurch eine punktuelle Belastung auf ein Anschlussteil auf mehrere Anschlussteile verteilt werden. Eine Gefahr an mechanischer Überbelastung der Verbindungen zwischen Ankerprofil und Anschlussteil kann dadurch verringert werden, was die Standfestigkeit der Vorrichtung erhöhen kann.

Um bei der Erstellung des Konstruktionsverbundes aus mehreren Ankerprofilen und Anschlussteilen eine ebene Fläche der Anschlussteile zu erreichen, ist die Steckaufnahme des Anschlussteils der Grünfläche zugewandt. Dadurch wird ein harmonischer Übergang der Begrenzungsfläche der Vorrichtung zur Grünfläche möglich und somit eine saubere optische Wirkung erreicht. Zusätzlich erfüllt die ebene Begrenzungsfläche den Nutzen, dass die Begrenzungsfläche weniger Angriffspunkte für Verschmutzungen bietet bzw. Verschmutzungen leichter entfernt werden können.

Weist die Vorrichtung mindestens einen Steckverbinder, mehrere Ankerprofile und mehrere Anschlussteile auf, wobei der Steckverbinder für zwei aneinander anstoßende Ankerprofile und/oder für zwei aneinander anstoßende Anschlussteile eine lösbare Steckverbindung ausbildet, kann eine mechanisch äußerst belastbare Vorrichtung geschaffen werden. Insbesondere sind Steckverbinder auch vergleichsweise einfach handhabbar in diesbezügliche Steckaufnahmen einzubringen, wodurch sich eine Montage- bzw. auch Wartungserleichterung ergeben kann.

In den Figuren ist beispielsweise der Erfindungsgegenstand anhand eines Ausführungsbeispiels näher dargestellt. Es zeigen
- Fig. 1: eine Stirnansicht auf die Vorrichtung mit separatem Ankerprofil und Anschlussteil,
- Fig. 2: eine abgerissene Stirnansicht auf die zusammengesetzte Vorrichtung mit einem zu Fig. 1 alternativen Anschlussteil und
- Fig. 3: eine teilweise aufgerissene Draufsicht auf die Vorrichtung.

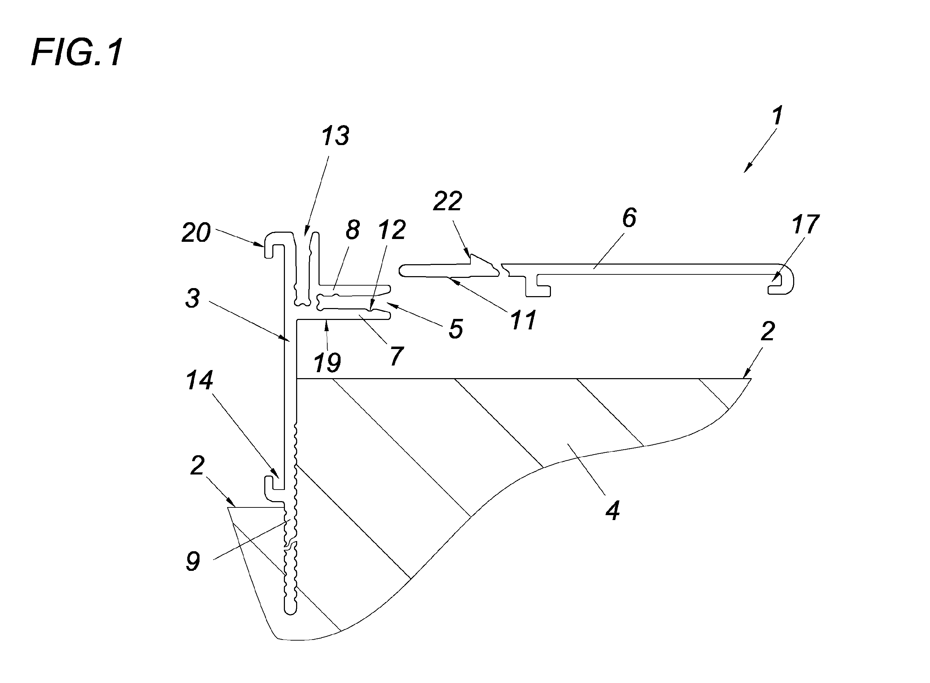

Nach Fig. 1 wird von einer Vorrichtung 1 zur Begrenzung einer Grünfläche 2 deren Ankerprofil 3 gezeigt, das durch ein Aluprofil gebildet wird. Dieses einteilige Ankerprofil 3 ist nach Fig. 1 teilweise in das Erdreich 4 eingeschlagen und bildet eine horizontale Aufnahme 5 aus. In diese Aufnahme 5 kann nach Fig.1 ein Anschlussteil 6 verbindend eingesetzt werden, um die Vorrichtung 1 damit beispielsweise zu verlängern. Konstruktiv einfach formt das Ankerprofil 3 zwei gegenüberliegende Aufnahmeschenkel 7 und 8 aus, die zwischen sich die Aufnahme 5 ausbilden. Da diese Aufnahmeschenkel 7 und 8 dem länglichen Grundkörper 9 des Ankerprofils 3 in Richtung des Anschlussteils 6 vorragen, ist die vorgegebene Einbringtiefe des Ankerprofils 3 in das Erdreich 4 auf einfache Weise feststellbar. Wie in Fig. 1 zu erkennen, kann das Ankerprofil 3 noch weiter in das Erdreich 4 eingedrückt werden, nämlich bis der untere Aufnahmeschenkel 7 am Erdreich 4 ansteht, ohne dass dabei befürchtet werden muss, dass die Aufnahme 5 in das Erdreich 4 ragt bzw. damit verschmutzt, wodurch in weiterer Folge ein Einsetzen des Anschlussteils 6 verhindert bzw. behindert werden kann. Der Aufnahmeschenkel 7 bildet daher einen Anschlag 19 beim Eintreiben des Ankerprofils 3 in das Erdreich 4 aus.

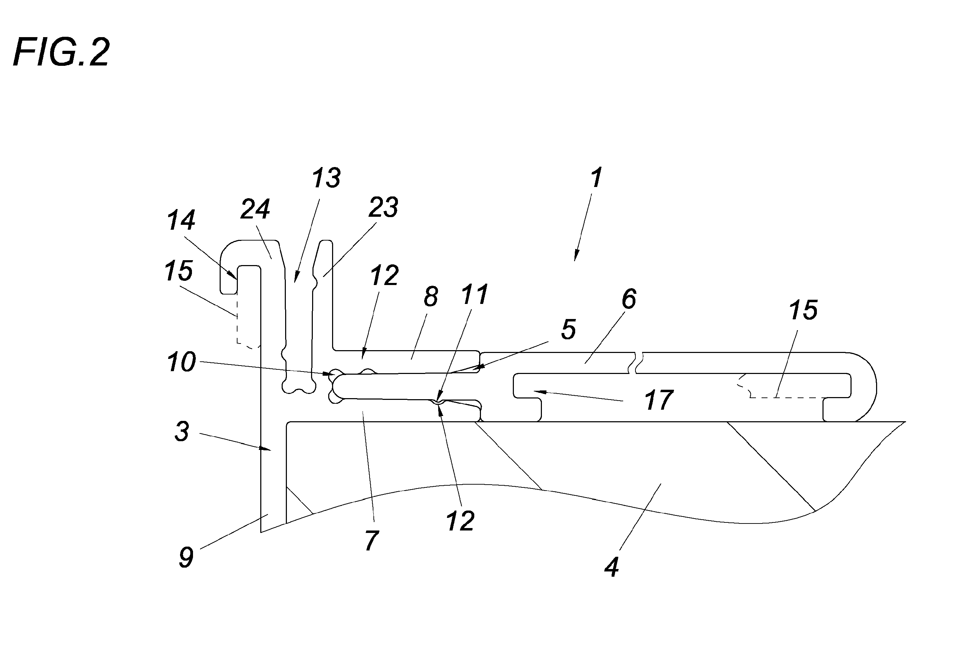

Wie in Fig. 2 an der zusammengesetzten Vorrichtung 1 erkannt werden kann, ragen die Aufnahmeschenkel 7, 8 in Richtung des an das Ankerprofil 3 anschließenden Anschlussteils 6 vor. Das hier gegenüber Fig. 1 dargestellte konstruktiv andere Anschlussteil 6 kann einen bündigen Anschluss an den Aufnahmeschenkel 7 und 8 ermöglichen. Des Weiteren ist - wie nicht näher dargestellt - selbstverständlich vorstellbar, das Anschlussteil 6 in die obere vertikale Aufnahme 13 einzusetzen, um auch hier eine Begrenzung zu schaffen. Auch diese Aufnahme 13 weist gleich wie die Aufnahme 5 Aufnahmeschenkel 23 und 24 auf.

Handhabungsfreundlich bilden die Aufnahmeschenkel 7, 8 der Aufnahme 5 mit dem Anschlussteil 6 zwischen sich eine lösbare Schnappverbindung 10 aus, indem eine Feder 11 des Anschlussteils 6, 22 in eine Nut 12 einrastet, wie dies insbesondere der Fig. 2 entnommen werden kann. Durch diese Schnappverbindung 10 besteht zwischen Anschlussteil 6 und Ankerprofil 3 eine lösbare Verbindung. Auch nach Montage der Vorrichtung 1 ist das Anschlussteil 6 dadurch aus den Aufnahmeschenkeln 7, 8 herausziehbar, um so das überdeckte Erdreich 4 beispielsweise für Wartungszwecke freizulegen.

Das Ankerprofil 3 bildet eine horizontale Aufnahme 5 und eine vertikale Aufnahme 13 aus. Dadurch sind Grünflächen 2 horizontal und auch vertikal zu begrenzen. Auch kann mit der vertikalen Aufnahme 13 ein Anschluss an andere Begrenzungsmittel ermöglicht werden, was nicht näher dargestellt worden ist.

Diese beiden Aufnahmen 5 und 13 sind am oberen Ende des Ankerprofils 3 vorgesehen, sodass sich eine T-förmige Profilausbildung am Ankerprofil 3 ergibt.

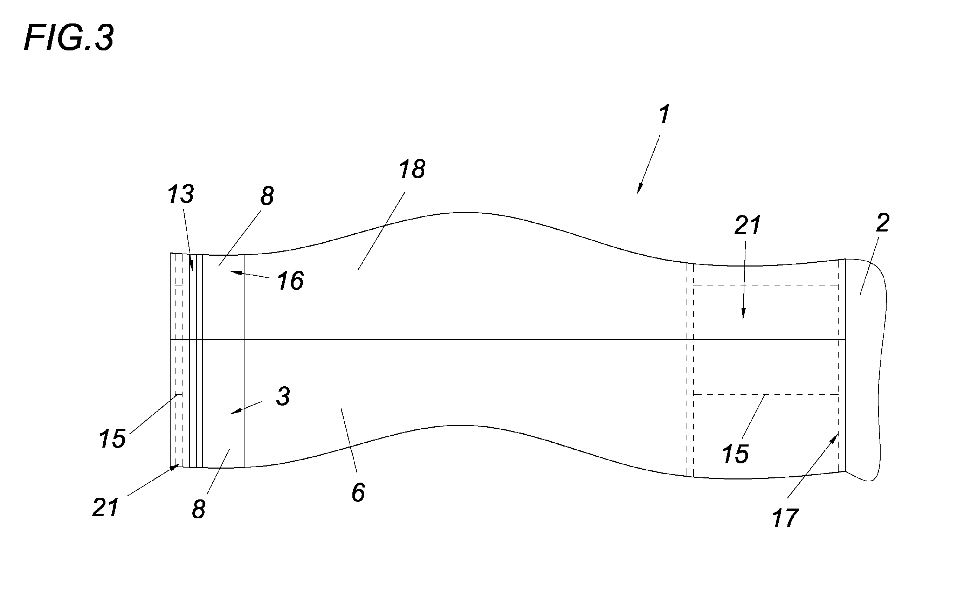

Wie in den Figuren 2 und 3 zu erkennen, bildet das Ankerprofil 3 bzw. 16 an seinem Stoß eine Steckaufnahme 14 aus. In diese Steckaufnahmen 14 ist ein Steckverbinder 15 eingeschoben, um zwei aneinander anstoßende Ankerprofile 3 und 16 zu einem Konstruktionsverbund zu verbinden. Beide Ankerprofile 3 und 16 sind konstruktiv gleich ausgeführt.

Auch das Anschlussteil 6 formt eine Steckaufnahme 17 aus, um dieses mit einem angrenzenden Anschlussteil 18 zu verbinden. Hierzu wird wiederum ein Steckverbinder 15 verwendet, der zur einfachen Handhabbarkeit der Vorrichtung 1 gleich dem Steckverbinder 15 zwischen den beiden Ankerprofilen 3 und 16 ausgebildet ist. Außerdem sind beide Anschlussteile 6, 18 konstruktiv gleich ausgeführt. Die Steckaufnahme 17 ist am der Schnappverbindung 10 gegenüberliegenden Ende des Anschlussteils 6 bzw. 18 vorgesehen. Das Anschlussteil 6, 18 ist so auf seinen beiden Endseiten in mechanischen Verbindungen eingespannt, und stellt so eine äußerst kippstabile Vorrichtung 1 sicher, wobei die damit ausgebildeten Steckverbindungen 21 eine einfache Montage der Vorrichtung 1 ermöglichen.

Nach Fig. 1 ist am Anschlussteil 6 ein Einsteckanschlag 22 zu erkennen, der auch einen bündigen Anschluss des Anschlussteils 6 an den Aufnahmeschenkel 8 des Ankerprofils 3 sicherstellt. Eine scharfe Kante auf der Sichtseite zwischen Anschlussteil 6 und Ankerprofils 3 wird so ausgeschlossen.

Beide Anschlussteile 6 nach Fig. 1 und Fig. 2 schließen daher zumindest am oberen Aufnahmeschenkel 8 bündig an.

## Patentansprüche

1. Vorrichtung zur Begrenzung einer Grünfläche (2) mit einem zum Einbringen in das Erdreich (4) der Grünfläche (2) vorgesehenen Ankerprofil (3), das mindestens zwei gegenüberliegende und zwischen einander eine Aufnahme (5 bzw. 13) ausbildende Aufnahmeschenkel (7, 8 bzw. 23, 24) aufweist, und mit einem in die Aufnahme (5) des Ankerprofils (3) einsetzbaren Anschlussteil (6), **dadurch gekennzeichnet, dass** die Aufnahmeschenkel (7, 8 bzw. 23, 24) in Richtung des an das Ankerprofil (3) anschließenden Anschlussteils (6) vorragen und mit dem Anschlussteil (6) eine lösbare Schnappverbindung (10) ausbilden.

2. Vorrichtung nach Anspruch 1, **dadurch gekennzeichnet, dass** für die lösbare Schnappverbindung (10) die Aufnahmeschenkel (7, 8 bzw. 23, 24) wenigstens eine Nut (12) und das Anschlussteil (6) eine entsprechend dieser Nut (12) eingreifbare Feder (11) ausbilden.

3. Vorrichtung nach Anspruch 1 oder 2, **dadurch gekennzeichnet, dass** die Aufnahme (5, 13) einen Anschlag (19) beim Eintreiben des Ankerprofils in das Erdreich (4) ausbildet.

4. Vorrichtung nach Anspruch 1, 2 oder 3, **dadurch gekennzeichnet, dass** das Ankerprofil (3) eine horizontale und eine vertikale Aufnahme (5, 13) ausbildet.

5. Vorrichtung nach Anspruch 4, **dadurch gekennzeichnet, dass** das Ankerprofil (3) T-förmig ausgebildet ist und an seinem oberen Ende die Aufnahmen (5, 13) aufweist.

6. Vorrichtung nach einem der Ansprüche 1 bis 5, **dadurch gekennzeichnet, dass** das Ankerprofil (3) aus Metall, insbesondere Aluminium oder einer Aluminiumlegierung, besteht.

7. Vorrichtung nach einem der Ansprüche 1 bis 6, **dadurch gekennzeichnet, dass** das Ankerprofil (3) an seinem Stoß eine Steckaufnahme (14) für Steckverbinder (15) aneinander anstoßender Ankerprofile (3,16) ausbildet.

8. Vorrichtung nach Anspruch 7, **dadurch gekennzeichnet, dass** die Steckaufnahme (14) auf der aufnahmefreien Profilseite (20) des Ankerprofils (3) vorgesehen ist.

9. Vorrichtung nach einem der Ansprüche 1 bis 8, **dadurch gekennzeichnet, dass** das Anschlussteil (6) an seinem gegenüberliegenden Ende, das die mit dem Ankerprofil (3) zusammenwirkende Schnappverbindung (10) aufweist, eine Steckaufnahme (17) für Steckverbinder (15) aneinander anstoßender Anschlussteile (6, 18) ausbildet.

10. Vorrichtung nach Anspruch 9, **dadurch gekennzeichnet, dass** die Steckaufnahme (17) des Anschlussteils (6) der Grünfläche (2) zugewandt ist.

11. Vorrichtung nach einem der Ansprüche 7 bis 10, **dadurch gekennzeichnet, dass** die Vorrichtung (1) mindestens einen Steckverbinder (15), mehrere Ankerprofile (3, 16) und mehrere Anschlussteile (6, 18) aufweist, wobei der Steckverbinder (15) für zwei aneinander anstoßende Ankerprofile (3, 16) und/oder für zwei aneinander anstoßende Anschlussteile (6, 18) eine lösbare Steckverbindung (21) ausbildet.
